(19) Europäisches Patentamt
European Patent Office
Office européen des brevets

(11) EP 4 557 725 A1

(12) EUROPEAN PATENT APPLICATION
published in accordance with Art. 153(4) EPC

(43) Date of publication:
21.05.2025 Bulletin 2025/21

(21) Application number: 24833175.3

(22) Date of filing: 27.02.2024

(51) International Patent Classification (IPC):
H04N 13/363 (2018.01)

(52) Cooperative Patent Classification (CPC):
H04N 9/31; H04N 13/363

(86) International application number:
PCT/CN2024/078815

(87) International publication number:
WO 2025/015922 (23.01.2025 Gazette 2025/04)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 19.07.2023 US 202363514457 P

(71) Applicant: Delta Electronics, Inc.
Taoyuan City 320023 (TW)

(72) Inventors:
• YANG, Chung-yi
  Taoyuan City 320023 (TW)
• FANG, Chao-yi
  Taoyuan City 320023 (TW)
• LIU, Lai-hsuan
  Taoyuan City 320023 (TW)

(74) Representative: 2K Patentanwälte Blasberg
Kewitz & Reichel
Partnerschaft mbB
Schumannstrasse 27
60325 Frankfurt am Main (DE)

(54) IMMERSIVE PROJECTION SYSTEM AND CORRECTION METHOD THEREFOR

(57) A calibration method of an immersive projection system, the calibration method includes: setting a virtual projection position and a virtual image distortion correction of a projection device; setting a virtual photographing position of a camera device; simulating a projection region of the projection device; defining a plurality of first feature points in the projection region; simulating a virtual shooting image including the projection region and the first feature points of the camera device; adjusting the virtual projection position and the virtual image distortion correction of the projection device based on the first feature points; and outputting a simulated overview profile including the virtual projection position and the virtual image distortion correction both being adjusted. An immersive projection system is also disclosed.

FIG.1

# EP 4 557 725 A1

**Description**

TECHNICAL FIELD

The present disclosure relates to a projection system, particularly relates to an immersive projection system and a calibration method thereof.

BACKGROUND OF THE DISCLOSURE

The immersive projection system may provide immersive user experience and is widely used in the applications including flight simulation, cultural and creative performances, planetarium with star simulation, and theme park entertainment, etc. The immersive projection system may provide the visual experience with ultra-wide view angle to the user, and let the user feel like situating in an ultra-realistic audio and video atmosphere.

The classic immersive projection system includes an immersive projection screen, a viewer seat or an aviation cockpit, a plurality of projector, and a set of media server, and any kinds of on-site decorative objects may also be included.

In order to provide the immersive user experience, the immersive projection scene is generally disposed with the ring-shaped projection screen, hemispherical projection screen, multi-wall projection screen, etc. A plurality of projectors needs to be used to perform warping and blending for projecting the immersive content in the aforementioned projection scene. Further, the production of the content also needs to be designed with respect to the projection theme. The projection content needs screen division to be delivered to corresponding projector for projection.

In order to attract the users, the immersive projection themes, contents and establishing manners are all different and diverse. Due to many different professional fields and details being involved, the overall planning and arrangement of the immersive projection system are very difficult, and an experienced system integrator is generally required for planning and arranging with respect to each project, and is also required to integrate different kinds of hardware and software tools.

The immersive projection system is difficult to be promoted and arranged rapidly due to the overall difficulty. Therefore, how to provide an immersive projection system and a calibration method thereof, which is easy to be arranged, is the problem that needs to be solved.

SUMMARY OF THE DISCLOSURE

In order to solve the difficulties of planning and arranging the immersive projection system, the disclosure provides an immersive projection system and a calibration method thereof, which may assist the user for all the steps from the scene planning for the immersive projection, projection simulation, installation and arrangement of the projection devices to the camera-assisted automatic calibration for the installation and arrangement in the projection site. The immersive projection system and the calibration method thereof in the disclosure may further assist the automatic screen division for the content player to greatly decrease the difficulties of planning and arranging the immersive projection system.

The disclosure provides a calibration method of an immersive projection system, the calibration method includes: setting a virtual projection position and a virtual image distortion correction of a projection device; setting a virtual photographing position of a camera device; simulating a projection region of the projection device; defining a plurality of first feature points in the projection region; simulating a virtual shooting image of the camera device, wherein the virtual shooting image includes the projection region and the first feature points; adjusting the virtual projection position and the virtual image distortion correction of the projection device based on the first feature points; and outputting a simulated overview profile. The simulated overview profile includes the virtual projection position and the virtual image distortion correction both being adjusted.

In some embodiments, the calibration method further includes: setting a projection position and an image distortion correction of the projection device and setting a photographing position of the camera device based on the simulated overview profile; obtaining a shooting image through the camera device; obtaining a plurality of second feature points in the virtual shooting image based on the first feature points; comparing the first feature points and the second feature points to obtain a virtual image difference parameter; and adjusting the projection position and the image distortion correction of the projection device based on the virtual image difference parameter and the shooting image.

In some embodiments, the obtaining of the shooting image through the camera device further includes: obtaining a plurality of third feature points in the shooting image based on the first feature points; and comparing the virtual image difference parameter and the third feature points to obtain an image difference parameter.

In some embodiments, the adjusting of the projection position and the image distortion correction of the projection device based on the virtual image difference parameter and the shooting image further includes: adjusting the projection position and the image distortion correction of the projection device based on the image difference parameter.

In some embodiments, the setting of the virtual projection position and the virtual image distortion correction of the projection device further includes: setting a virtual color and a virtual brightness of the projection device; and adjusting the virtual color and the virtual brightness of the projection device based on the first feature points. The simulated overview profile further includes the virtual color and the virtual brightness both being adjusted.

In some embodiments, the setting of the virtual projection position and the virtual image distortion correction of the projection device further includes: setting a plurality of virtual projection positions and a plurality of virtual image distortion corrections of a plurality of projection devices; the adjusting of the virtual projection position and the virtual image distortion correction of the projection device based on the first feature points further includes: adjusting a blending calibration profile of the projection devices based on the first feature points. The simulated overview profile further includes the blending calibration profile being adjusted.

In some embodiments, the adjusting of the virtual projection position and the virtual image distortion correction of the projection device based on the first feature points further includes: obtaining a plurality of second feature points in the virtual shooting image based on the first feature points; comparing the first feature points and the second feature points to obtain a virtual image difference parameter; and adjusting the virtual photographing position of the camera device based on the virtual image difference parameter.

In some embodiments, the adjusting of the virtual photographing position of the camera device based on the virtual image difference parameter further includes: adjusting a simulated photographing parameter of the camera device based on the virtual image difference parameter.

In some embodiments, the calibration method further includes: setting a projection position and an image distortion correction of the projection device and setting a photographing position of the camera device based on the simulated overview profile; setting a photographing parameter of the camera device based on the simulated photographing parameter; obtaining a shooting image through the camera device; and adjusting the projection position and the image distortion correction of the projection device based on the virtual image difference parameter and the shooting image.

The disclosure further provides a calibration method of an immersive projection system, the calibration method includes: setting a virtual projection position and a virtual image distortion correction of a projection device; setting a virtual photographing position of a camera device; obtaining a projection region and a virtual shooting image through a projection simulation procedure; defining a plurality of first feature points in the projection region; adjusting the virtual projection position and the virtual image distortion correction of the projection device based on the first feature points; and outputting a simulated overview profile. The simulated overview profile includes the virtual projection position and the virtual image distortion correction both being adjusted.

In some embodiments, the projection simulation procedure includes a projection geometry simulation sub-procedure, a camera device simulation sub-procedure, a warp simulation sub-procedure, a color and brightness simulation sub-procedure, and a blend simulation sub-procedure.

The disclosure further provides an immersive projection system, cooperated with a projection screen, the immersive projection system includes: a projection device, including a projection position and an image distortion correction, and configured to project a projection region on the projection screen; and a camera device, including a photographing position, and configured to obtain a shooting image, wherein the shooting image includes the projection region. The projection position and image distortion correction of the projection device is set based on the shooting image and a virtual shooting image.

In some embodiments, the virtual shooting image is obtained through a projection simulation procedure.

In summary, the immersive projection system and the calibration method thereof in the disclosure may assist the user to perform the scene planning, the selection of the projection device and the lens of the camera device, and the scene projection simulation during the system planning stage, and may output the simulated overview profile according to the projection simulation result. On one hand, the calibration method of the immersive projection system in the disclosure may provide the user for the references of the physical installation position, projection orientation, selection of projection lens of the on-site projection device. On the other hand, the calibration method of the immersive projection system in the disclosure may also provide the user for the arrangement information of the projection size of projection device, displacement of the lens mount, keystone correction, etc., related to multi-projection installation and automatic calibration procedure. Further, the calibration method of the immersive projection system in the disclosure may provide the automatic calibration procedure to suggest the information such as the types of lens for the projection device to be used, the arranging position, field of view (FOV), etc., for the automatic calibration procedure to smoothly perform the automatic warping, blending, and color calibration, etc., assisted by the camera device. Moreover, after the automatic calibration procedure is completed, the related information corresponding to multi-projection-scene division, blending band, etc., may be outputted to set up the display card of the media server for outputting pictures.

Therefore, as described above, the immersive projection system and the calibration method thereof in the disclosure may provide an overall solution covering the system planning, selection of the projection device and projection lens, beginning of the projection simulation to the projection automatic calibration and installation, setup of content player. As a result, the difficulties of system planning and establishment may be greatly decreased to facilitate the rapid establishment and promotion of the immersive projection system.

BRIEF DESCRIPTION OF THE DRAWINGS

FIG. 1 is the flowchart of the calibration method of the immersive projection system in the first embodiment of the disclosure.
FIG. 2 is the schematic diagram of the immersive projection system of the disclosure.
FIG. 3A to FIG. 3G are the schematic diagrams of different immersive projection screens.
FIG. 4 is the schematic diagram of the projection frustum of the projection device.
FIG. 5A is the schematic diagram of the combined projection region of the projection devices.
FIG. 5B is the schematic diagram of the virtual shooting image of the camera device.
FIG. 6A and FIG. 6B are the schematic diagram of the blending process of the planar projection screen.
FIG. 7A and FIG. 7B are the schematic diagram of the blending process of the curved projection screen.
FIG. 8 is the flowchart of the calibration method of the immersive projection system in the second embodiment of the disclosure.
FIG. 9 is the flowchart of the calibration method of the immersive projection system in the fourth embodiment of the disclosure.
FIG. 10 is the flowchart of the calibration method of the immersive projection system in the fifth embodiment of the disclosure.
FIG. 11 is the schematic diagram of the projection device of the disclosure.

Labels in the drawings:

1: immersive projection system
10 , 10A~10G: projection screen
11: viewer seat
12: projection device
121: combined projection region
122: first feature point
13: camera device
131: virtual shooting image
132: second feature point
14: media server
20: electronic lens mount
21: projection lens
22: horizontal-shifting stepper motor
23: vertical-shifting stepper motor
24: motor driving circuit
25: electronic image distortion adjusting circuit
S01~S12 , S20~S30: steps

DETAILED DESCRIPTION

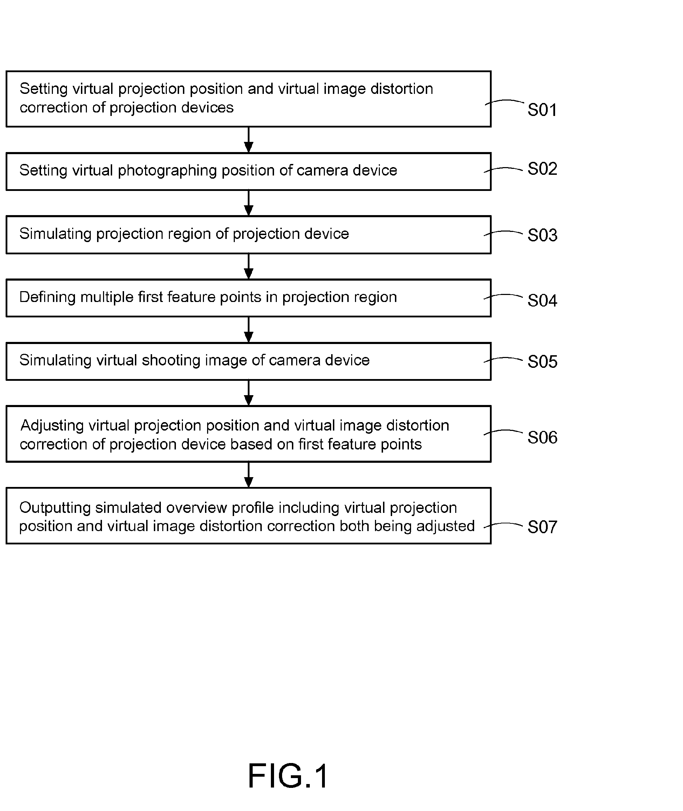

FIG. 1 is the flowchart of the calibration method of the immersive projection system in the first embodiment of the disclosure. As shown in FIG. 1, the calibration method of the immersive projection system in the disclosure includes the step S01 to the step S07. The step S01 is setting a virtual projection position and a virtual image distortion correction of a projection device. The step S02 is setting a virtual photographing position of a camera device. The step S03 is simulating a projection region of the projection device. The step S04 is defining a plurality of first feature points in the projection region. The step S05 is simulating a virtual shooting image of the camera device. The step S06 is adjusting the virtual projection position and the virtual image distortion correction of the projection device based on the first feature points. The step S07 is outputting a simulated overview profile including the virtual projection position and the virtual image distortion correction both being adjusted.

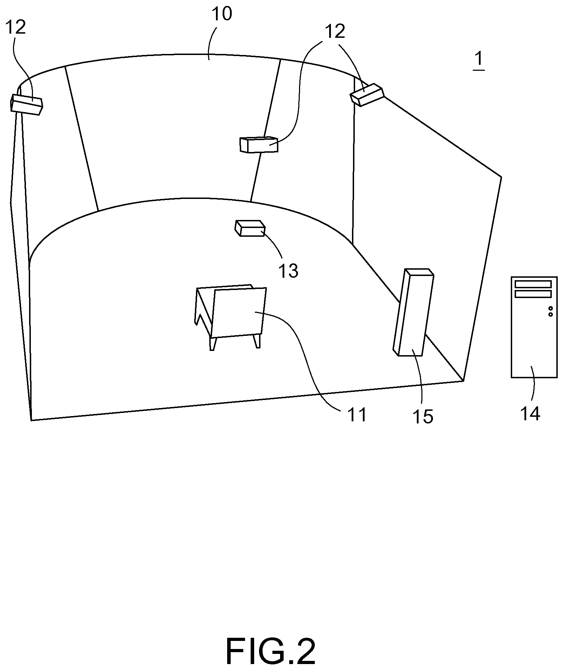

FIG. 2 is the schematic diagram of the immersive projection system of the disclosure. It should be noted that the simulated result is related to the installation site, thus, the immersive projection system 1 in FIG. 2 exemplarily indicates both the immersive projection system in the virtual environment and the immersive projection system in the installation site, here is not intended to be limiting.

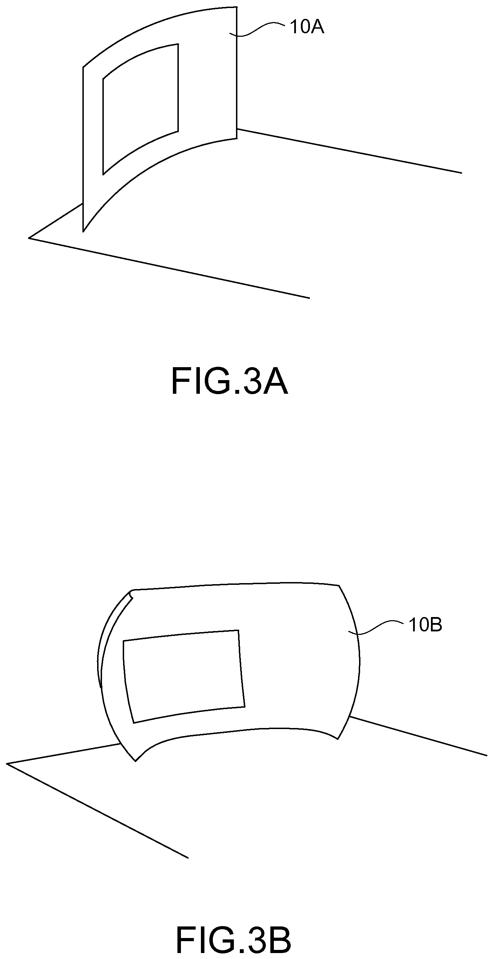

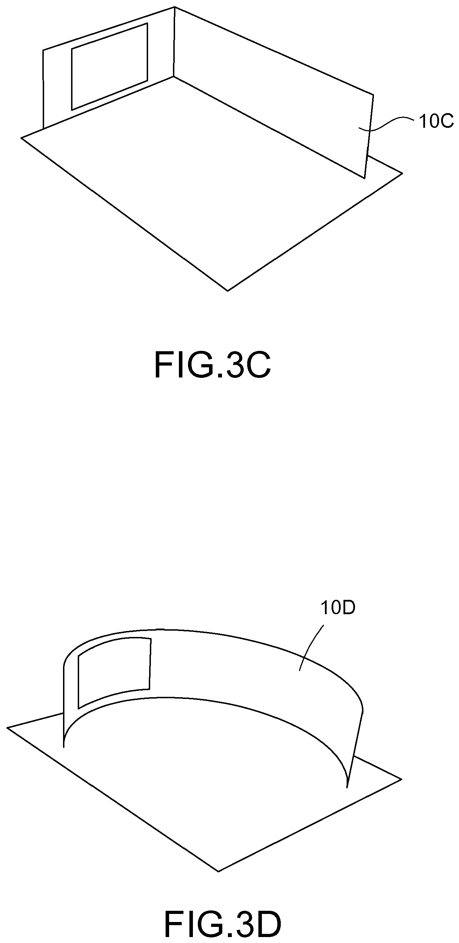

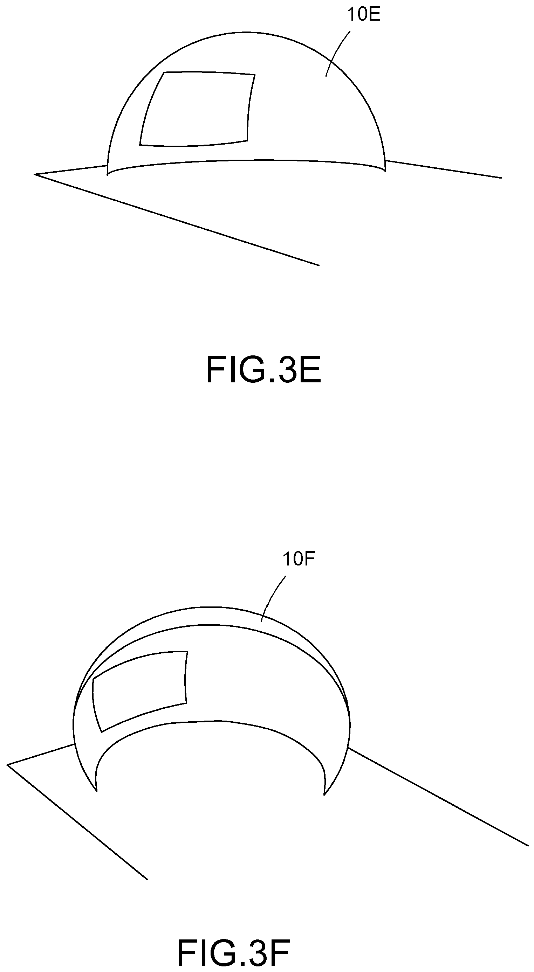

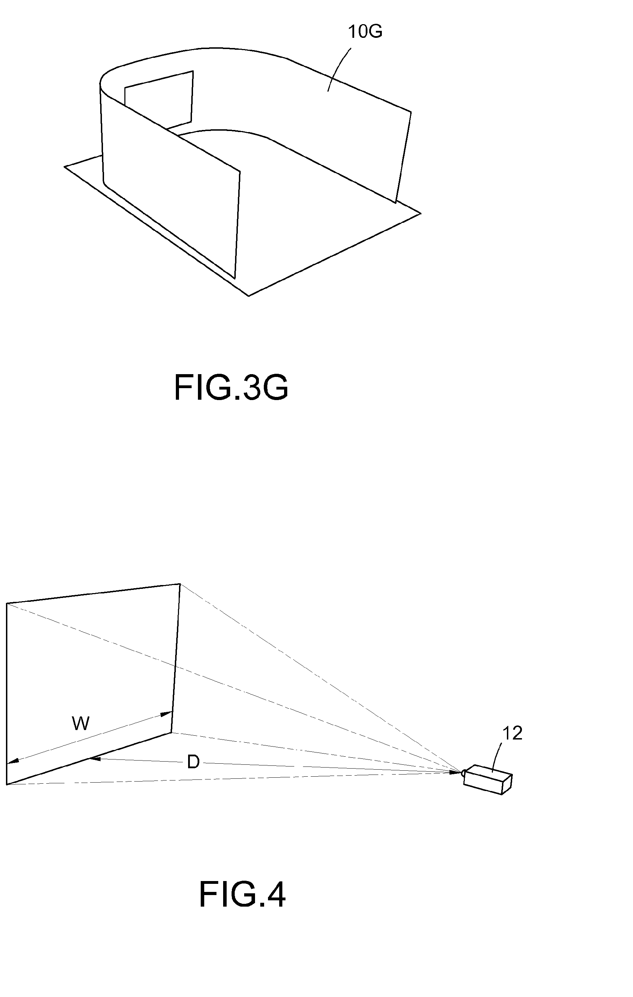

As shown in FIG. 1 and FIG. 2, in the step S01, the virtual projection position and the virtual image distortion correction (or geometric distortion correction of virtual projection scene) of the projection device 12 are set. In the step S02, the virtual photographing position of the camera device 13 is set. In some embodiments, the immersive projection system 1 and the immersive projection screen 10 are cooperated. The immersive projection system 1 includes, for example, a viewer seat 11 (or aviation cockpit), a projection device 12, a camera device 13, and a media server 14, here is not intended to be limiting. In the embodiment, a plurality of projection devices 12 is used as an example, here is not intended to be limiting. In some applications, single projection device 12 (for example, FIG. 3A and FIG. 3B) may also be used. The immersive projection screen 10 generally covers a wide view angle with at least equal to or greater than 120° horizontally for the user having the immersive visual experience. FIG. 3A to FIG. 3G are the schematic diagrams of different immersive projection screens 10A-10G. The immersive projection screen may include, for example, one dimensional curved immersive projection screen 10A (FIG. 3A), two dimensional curved immersive projection screen 10B (FIG. 3B), multi-wall cave type immersive projection screen 10C (FIG. 3C), cylindrical surface type immersive projection screen 10D (FIG. 3D), hemispherical immersive projection screen 10E (FIG. 3E), spherical immersive projection screen 10F (FIG. 3F), and horseshoe-shaped immersive projection screen 10G (FIG. 3G), etc., here is not intended to be limiting.

Referring back to FIG. 1 and FIG. 2, in a multi-projection simulation tool, the specifications of the projection device 12 and the camera device 13 may be set up according to different requirements. The user may set up a plurality of virtual projection positions and a plurality of virtual image distortion corrections of a plurality of projection devices 12, and may set up the virtual photographing position of the camera device 13. It is worth mentioning that the virtual projection position may indicate the arranged physical position of the projection device 12, or the scene position projected from the lens after the projection device 12 is arranged. Similarly, the virtual photographing position may indicate the arranged physical position of the camera device 13, or the scene position obtained by the lens after the camera device 13 is arranged. Further, the disposed position of the media server 14 is not limiting, the media server 14 is used to provide a set of projection content with wide width, wide view angle, and proper division to the projection devices 12. It should be noted that, in the multi-projection simulation tool, the position of the media server 14 may not be arranged in the first place. The projection devices 12 may project to and display at the immersive projection screen 10 by using warp and blend manner. The camera device 13 is used for the automatic projection calibration. Moreover, in the multi-projection simulation tool, the located atmosphere of the immersive projection system 1 may also be simulated to have the decorative object 15.

It is worth mentioning that the multi-projection simulation tool may provide the function of layout assist. The multi-projection simulation tool may provide the selection assistance for the projection device 12 and the camera device 13 which are suitable for the established three-dimensional projection scene. The layout assist may automatically calculate the layout information suitable for the scene according to the conditions such as the size and shape of the projection screen, the projection distance of the projection device, the scene size, the brightness, etc. The layout information includes the related setting such as the amount, arranging position, gesture, lens of the projection device, to provide the reference of on-site installation scenario, and is used in the automatic calibration stage. Further, the layout assist may automatically compute and determine the virtual projection position and the virtual image distortion correction of the projection device 12 according to the specification and projection distance of the projection device 12 selected by the user, and the user may use that as baseline to fine-tune. Moreover, the selection of the projection device 12 is related to the space of projection scene, projection surface (or screen), display resolution, size of warping and blending band, and brightness requirement, and is also related to the selectable projection lens.

In some embodiments, the layout assist may provide two kinds of use mode: the mode of considering the amount of the projection device and the mode of considering the projection distance. In the installation scene planning, the conditions such as the overall projection covering whole screen and conforming to the brightness requirement need to be fulfilled, and the required amount of the projector may be different under different combinations of the projector model and lens. The desirable arranging amount of the projector may be automatically planned through "the mode of considering the amount of the projection device" of the layout assist. On the other hand, in some scenario with particular space condition, the installation distance of the projector may be restricted. The layout assist may plan the desirable layout solution for conforming with the requirements of projection size and brightness condition under known projection distance condition through "the mode of considering the projection distance".

Specifically, under "the mode of considering the amount of the projection device", the user needs to set up the upper limit of projection size of single projector and the lowest brightness requirement of the projection on the screen in advance. Next, the user needs to select the projector model and the arranged lens. At the same time, the user needs to assign the percentage of blending band. The layout assist may calculate the required amount of the projector and the related layout information according to the conditions, and show the layout result as a three-dimensional diagram.

On the other hand, under "the mode of considering the projection distance", the user needs to assign the projection distance and the lowest brightness requirement of the projection on the screen in advance. Next, the user needs to select the projector model and the arranged lens. At the same time, the user needs to assign the percentage of blending band. The layout assist may calculate the required amount of the projector and the related layout information according to the conditions, and show the layout result as a three-dimensional diagram. The aforementioned descriptions are exemplary, here is not intended to be limiting.

FIG. 4 is the schematic diagram of the projection frustum of the projection device 12. As shown in FIG. 4, the lens of the projection device 12 has a throw ratio (TR). The definition of TR is that the projection distance D is divided by the projection scene width W (that is, TR = D/W). The lens with smaller TR may project the scene with the same size under a shorter distance. When the on-site space is limited, selecting the projection lens with smaller TR is generally more reasonable to fulfill the on-site requirement. On the other hand, the projection lens with smaller TR may generally have trapezoidal distortion for the projection scene. Therefore, the selection of the lens of the projection device 12 is generally depending on the on-site space restriction for installing the most proper projection lens. The overall projection scene needs to be slightly greater than the size of the projection screen. If the projection has geometric distortion (such as trapezoidal distortion) due to the installation condition, that may be corrected through the position adjustment of the lens mount of the projection device 12 and the electronic (image) distortion correction adjustment function.

In other words, the projection device 12 is generally installed at a higher position with respect to the space restriction of the installation site of the projection device 12, and to avoid the interference to the projection optical path from the on-site viewer. Therefore, the projection optical axis may not be able to be normal to the projection plane. As a result, the projection scene has trapezoidal distortion on the projection screen. The projection device 12 generally has manual or electronic lens mount, and the projection trapezoidal distortion (image distortion) due to the installation condition may be reduced through the horizontal and vertical position adjustment of the lens mount. Further, the electronic image distortion adjusting circuit in the projection device 12 may also perform the projection trapezoidal correction. After the correction, the projection device 12 may generate a rectangular projection scene on the projection screen. In the multi-projection simulation tool, the simulated adjustment function of horizontal and vertical position adjustment of the lens mount and the electronic image distortion (virtual image distortion) correction may be provided. Thus, the multi-projection simulation tool may be used to simulate the projection distortion adjustment correction function, which is required for the projection device 12 in the on-site installation.

More specifically, in the three-dimensional simulation engine of the multi-projection simulation tool, the scene is generally depicted as the objects in the three-dimensional space. Each object is structured by many three-dimensional vertexes, and the objects are rendering and displaying on the projection screen.

The rendering scene is with respect to the camera device; thus, the vertex of the scene also needs to be defined with respect to the perspective of the camera device. When depicting the grids in the three-dimensional simulation engine (for example, but not limited to, rendering pipeline of OpenGL, or graphics pipeline of Direct3D, etc.), the vertex shader of the three-dimensional simulation engine may process every vertex to make the position of vertex be defined in the clip space.

In the three-dimensional simulation engine, the model view projection (MVP) is a series of matrix transformations for applying to define the vertex in the model space, transforming that from the local space to the world space through the model matrix, and transforming that to the view space through the view matrix, and further transforming that to the clip space through the projection matrix. In the end, rasterization is performed to the object. In other words, it is the process of transforming the image indicated by the vector graphics format to bitmap for monitor or projection display.

For example, that may be represented by following equation.

$$v' = P \times V \times M \times v$$

That is, the vertex position (v) of the local space is firstly transformed by the model matrix (M), then transformed by the view matrix (V), and finally transformed by the projection matrix (P) to be the vertex coordinate in the clip space. It is worth mentioning that the projection matrix may be an orthographic projection matrix or a prospective projection matrix.

Specifically, the multi-projection simulation tool may provide the user to perform the arrangement simulation and projection simulation of the immersive projection space scene. That is mainly using the aforementioned model view projection technology to transform the three-dimensional objects in the projection scene to two-dimensional bitmap, and calculate and render light/shadow, lightness/darkness, color of the three-dimensional objects in the three-dimensional scene through shader.

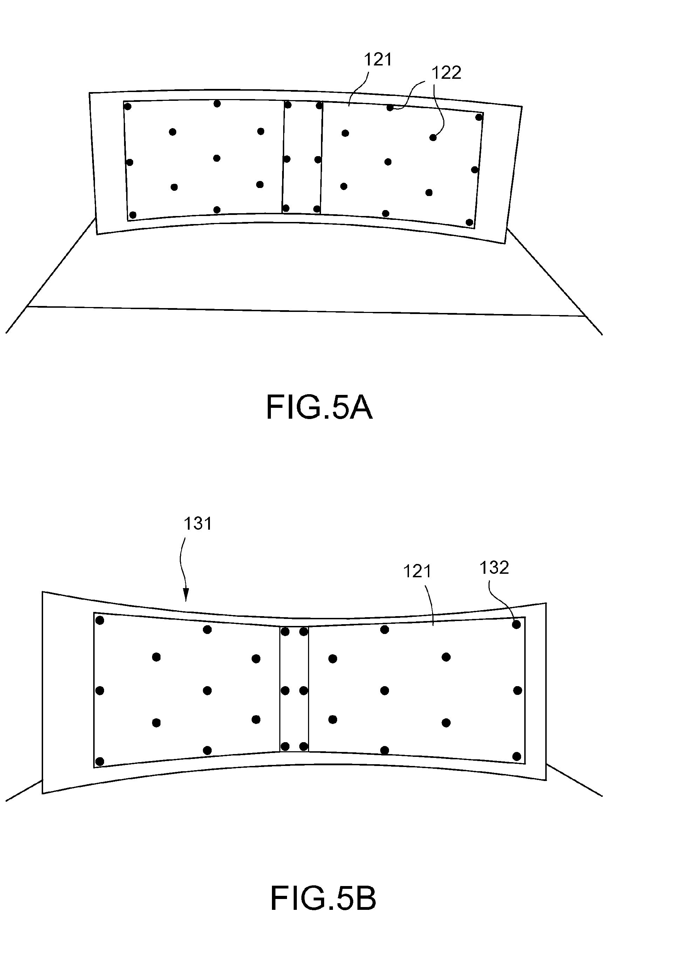

FIG. 5A is the schematic diagram of the combined projection region of the projection devices. FIG. 5B is the schematic diagram of the virtual shooting image of the camera device. As shown in FIG. 1, FIG. 5A, and FIG. 5B, in the step S03, the projection region 121 of the projection device is simulated. In the step S04, a plurality of first feature points 122 in the projection region 121 is defined. In the step S05, the virtual shooting image 131 of the camera device is simulated. The virtual shooting image 131 includes the projection region 121 and the first feature points 122 (indicated as the second feature points 132 in FIG. 5B).

In the multi-projection simulation tool, the projection simulation procedure may be used to simulate the combined projection region 121 and the virtual shooting image 131 of the projection devices 12. In some embodiments, the projection simulation procedure may include, for example, a projection geometry simulation sub-procedure, a camera device simulation sub-procedure, a warp simulation sub-procedure, a color and brightness simulation sub-procedure, and a blend simulation sub-procedure, here is not intended to be limiting. For example, if single projection device is used, the warp simulation sub-procedure and the blend simulation sub-procedure may be omitted.

Here explains the projection geometry simulation sub-procedure. The projection geometry of the projection scene is using the exit pupil position of the lens of the projection device as the origin, and is formed as the viewing frustum expanded from the projection horizontal/vertical FOV according to aspect ratio (AR) of the projection image from the projection device and TR of the projection lens. The object surface in the view frustum is rendered to be the projection scene. The horizontal FOV (HFOV) and vertical FOV (VFOV) may be calculated by following equations through AR of the image and TR of the lens.

$$HFOV = 2 \times atan\ (0.5/TR)$$

$$VFOV = 2 \times atan\ (2 \times TR \times AR)$$

In the practical application, the projection scene may be adjusted translationally through moving the horizontal/vertical position of the lens. At the same time, a lens shift may occur between the central optical axis of the projection device and the center position of the actual projection scene. HFOV and VFOV may be estimated by considering the lens shift. Further, the projection simulation of the projection simulation tool on the projection screen is divided into two parts: the projection rim formed on the projection screen and the projection content scene on the projection screen.

The arrangement information of the projection device in the scenario includes the position of the projection device, the installation gesture of the projection device (such as elevation angle, azimuth angle, roll angle), FOV and exit pupil distance of the lens of the projection device, projection optical axis, and lens shift. Thus, in the multi-projection simulation tool, the MVP matrix expanded from the projection optical origin of the projection device may be formed.

In the simulated physical world scene, the points on the projection screen or wall are transformed to the homogeneous coordinate on the view frustrum expanded from the projection optical origin of the projection device through the MVP matrix of the projection device. After de-homogeneous and performing linearization between the near plane and far plane of the view frustum, the distances of the points with respect to the optical origin of the projection device may be obtained. The depth map table of the view frustrum may be established through the depth test function of the three-dimensional simulation engine (for example, but not limited to, OpenGL). The depth map table records the distance information of the projection light trace of the projection device projected to the object surface. The depth map table is two dimensional. If the size setting is the same with the resolution of the projection device, each point index of the depth map table is exactly the pixel position of the image plane inside the projection device. The horizontal/vertical projection FOV formed by every index position on the depth map table corresponding to the physical world scene and the projection optical axis may be calculated through the depth map table and FOV of the view frustum of the projection device.

The world coordinate of the index position corresponding to the physical world scene may be calculated through the position of the projection device and the horizontal/vertical projection FOV of the index position of the depth map table to depict the projection borderline. If the world coordinate in the physical world scene needs to be obtained, HFOV ($\theta_H$) and VFOF ($\theta_V$) of the index position in the depth map table with respect to the projection optical axis of the projector are calculated in advance. The world coordinate (x, y, z) of the corresponding position in the physical scene may be obtained from the world coordinate (Prj.x, Prj.y, Prj.z) of the projector and the depth d1 through following equations.

$$x = Prj.x + d1 \times tan(\theta_H)$$

$$y = Prj.y + d1 \times tan(\theta_V)$$

$$z = Prj.z - d1$$

All of the index positions on the depth map table are generally transformed to the world coordinate and connected to each other to depict the projection rim on the arbitrary shape.

Here explains the color and brightness simulation sub-procedure. The content (color) projected on the projection screen is determined by the pixel shader in the graphics processing unit (GPU) of the computer executing the multi-projection simulation tool. The software in the pixel shader needs to compute whether the rendering point on the current projection screen is in the projection FOV of the projection device to be the reference of rendering color mechanism. In some embodiments, the setting of the virtual projection position and the virtual image distortion correction of the projection device further includes: setting a virtual color and a virtual brightness of the projection device; adjusting the virtual color and the virtual brightness of the projection device based on the first feature points.

First, the real-time information of the projection device, including the position of the projection device (that is, the center position of the projection optics), vector of the projection optical axis, horizontal/vertical reference vector of the scene, etc., is inputted to the pixel shader after gesture of the projection device being adjusted. GPU may input the coordinates of every point (that is, rendering point) on the projection screen surface in the physical world scene to the pixel shader for computation. The software firstly computes the vector formed from the projection optical center to the rendering point, and projects the vector to the plane formed by the optical axis vector of the projection device and the horizontal/vertical reference vector of the scene to compute the HFOV/VFOF of the rendering point in the view frustum expanded from the projection device. If the rendering point is in the projection FOV range of the projection device, that belongs to the projection scene, and the rendering point is rendered to be the scene color. If the rendering point is outside of the range, the rendering point is rendered to be the original color of the projection screen.

The projection scene color has two sources: the texture image defined by the user or the color of the projection screen formed by brightness simulation. The pixel color value of the rendering point mapping to the texture image is the texture coordinate positioned by the proportional relation between the HFOV/VFOV of the rendering point and the projection FOV of the projector. The color value corresponding to the pixel may be looked up through the texture coordinate for the pixel shader to determine the color of the rendering point. The texture coordinate (txelx, txely) may be calculated by following equations. The horizontal projection FOV range of the projection device is (leftFOV, rightFOV), and the vertical projection FOV range of the projection device is (lowFOV, upFOV).

$$\text{txelx} = (\tan(\theta_H) - \tan(\text{leftFOV})) / (\tan(\text{rightFOV}) - \tan(\text{leftFOV}))$$

$$\text{txely} = (\tan(\theta_V) - \tan(\text{lowFOV})) / (\tan(\text{upFOV}) - \tan(\text{lowFOV}))$$

When the difference between the color of the projection screen and the incident brightness is used to simulate the projection scene, the designated projection screen color is transformed from RGB (Red, Green, Blue) color coordinate to HSV (Hue, Saturation, Value/Brightness) color coordinate, and the distance between the rendering point and the projector is calculated through the depth map table. Referring to the brightness (lumen) output of the projection device, the brightness proportion of the value in HSV color coordinate is derived and transformed back to RGB color coordinate. That is, the rendering color of the point from the pixel shader. In order to calculate the brightness proportion of the value in HSV color coordinate, the illuminance of the projection screen under the projection of the projection device is calculated in advance, and that is divided by the illuminance of current environmental light source to acquire screen lighting ratio (SLR). For example, two projectors of a specific projector model outputting 6200 lm, the projection distances respectively are 6.5 m and 8.5 m, and the indoor illuminance is 300 lx. SLR is calculated to be 1.23 and 1.86, respectively. As a result, the projection screen is proportionally adjusted by the value of the HSV color coordinate of the projection region color. The simulated result may be conformed with the feeling in realistic experience.

Since SLR is changed sensitively in short projection distance, the multi-projection simulation tool may linearize SLR. Linearized SLR may make the projection scene color be saturated less rapidly during short-distanced projection simulation, and may prevent the problem of color saturation at the overlapped region during multi-projector projection.

Here explains the blend simulation sub-procedure. The overlapped region generated by a plurality of projection devices is brighter than the non-overlapped region due to brightness addition. Therefore, the blending process is needed for the rendering in the overlapped region. The blend simulation is performed in the pixel shader of GPU. In some embodiments, the setting of the virtual projection position and the virtual image distortion correction of the projection device further includes: setting a plurality of virtual projection positions and a plurality of virtual image distortion corrections of a plurality of projection devices; the adjusting of the virtual projection position and the virtual image distortion correction of the projection device based on the first feature points further includes: adjusting a blending calibration profile of the projection devices based on the first feature points.

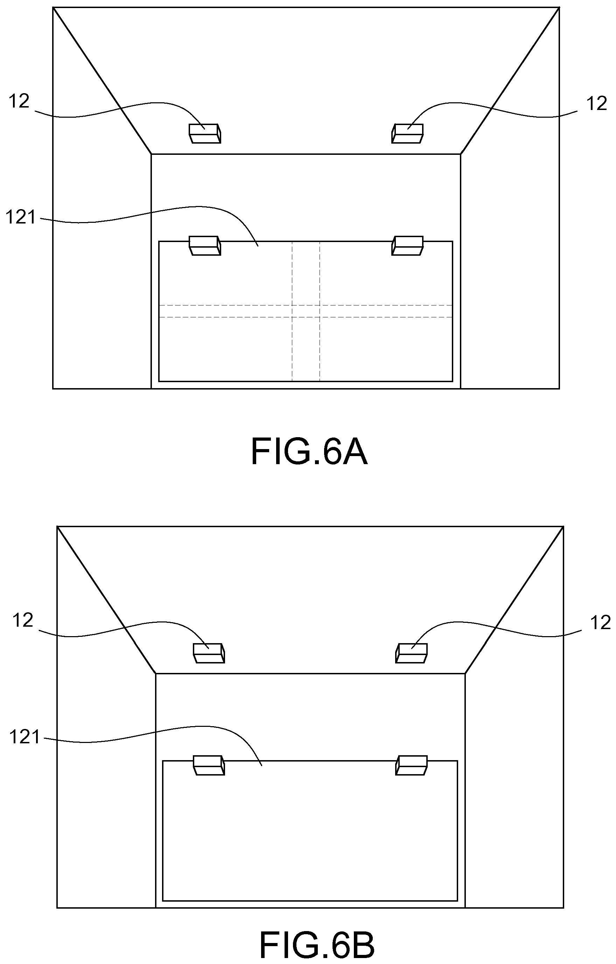

The blending process is that, for example, a plurality of projection devices forms the edge blending on the planar projection screen. FIG. 6A and FIG. 6B are the schematic diagram of the blending process of the planar projection screen. First, as shown in FIG. 6A, HFOV/VFOV corresponding to the projection overlapped region, for example, HFOV $\theta_T$ (such as the blending reference line corresponding to upper overlapped region) and VFOV $\theta_L$ (such as the blending reference line corresponding to lower overlapped region) corresponding to the blending reference line of the overlapped region, is calculated. As shown in FIG. 6B, when the pixel shader projects the overlapped region, the pixel shader performs equally proportional dimming process to the projection scene by HFOV/VFOV of the target rendering point and HFOV/VFOV of the projection overlapped region to make added brightness be the same with that of the non-overlapped region. Finally, the simulated result is obtained by using the color and brightness simulation manner as mentioned above to calculate.

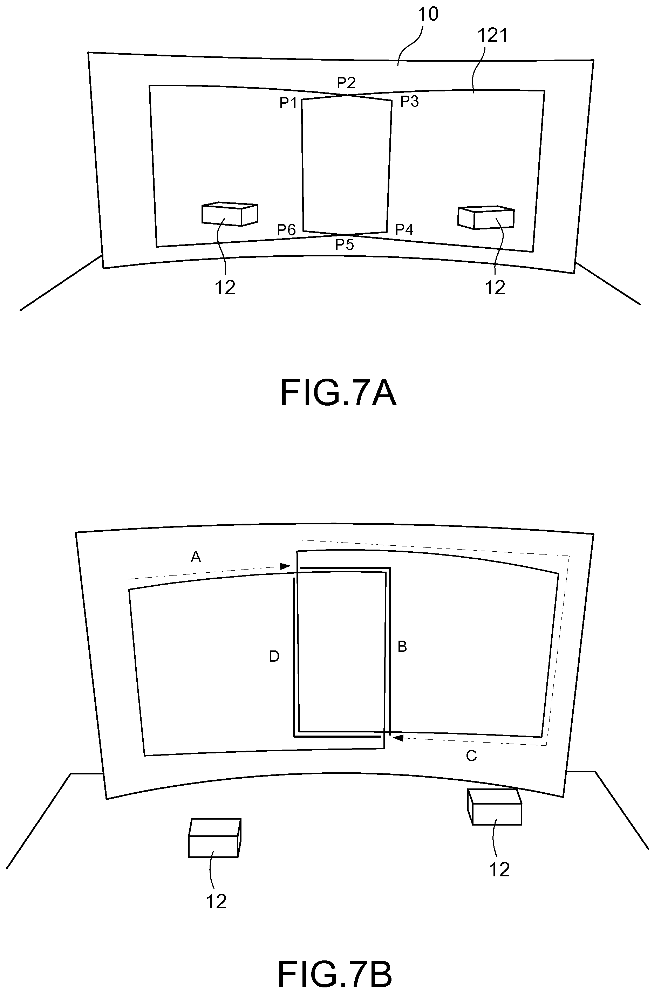

FIG. 7A and FIG. 7B are the schematic diagram of the blending process of the curved projection screen. On the other hand, as shown in FIG. 7A, the overlapped region on the non-planar projection screen 10 is generally non-linear. The blending region is in polygonal shape enclosed by the points P1-P6 as shown in FIG. 7A. The target rendering points on the projection scene of the projection screen corresponding to FOV of each projection device may be acquired through the depth map table of each projection device obtained by projection simulation and relative position between the projection devices. If FOV of the point from the projection device is located in the projection FOV ranges of two (or multiple) projection devices, the point is determined to be the blending region. Accordingly, the point set of the polygonal borderline of the blending region may be calculated by software algorithm. For example, the algorithm for polygon construction of projection blending region of two projection devices. Every point in the point set of the polygonal borderline is with the format as below.

$$P = [ \ (Prj1, HFOV1, VFOV1), (Prj2, HFOV2, VFOV2), \dots \ ]$$

Prj1, Prj2, etc., is the projection device projecting the point. HFOV1 and VFOV1 is HFOV/VFOV of the point seen from the projection device Prj1, HFOV2 and VFOV2 is HFOV/VFOV of the point seen from the projection device Prj2, and so on.

The simulation of color brightness is as below. The color brightness is distributed to the projection devices, which project to the point, by dimming in a gradient proportion manner according to FOV of the target rendering point and distance between the target rendering point and FOV borderline of each projection device in the blending region, and GPU performs color brightness addition to generate the screen rendering point. The relation between the gradient variation percentage of the color brightness and FOV is as below.

$$Prj1.Intensity(P)\% = (FOVH - FOVHm) / (FOVH - FOVH1) \times 100\%$$

$$Prj2.Intensity(P)\% = 100 - Prj1.Intensity(P)\%$$

FOVH1, FOVH is the HFOV range of the projection device Prj1 passing point P when VFOV of the projection device Prj1 in the blending region is designated. FOVHm is HFOV angle of point P in the projection device Prj1.

In other words, as shown in FIG. 7B, the line section B is calculated from the line section A, the line section D is calculated from the line section C, and thus, the blending region is obtained. The surface projection depth of the non-planar projection screen is different based on curvature, thus, apart from FOV, the depth distance of each projection device at the point needs to be considered for the color brightness distribution. For example, the gradient variation is firstly calculated by using FOV, the color brightness proportion is being dimmed, and the adjustment is performed based on depth square ratio of the projection devices projecting to the point.

Here explains the warp simulation sub-procedure. When the projection optical axis is not normal to the projection screen surface, the projection scene has the problem of trapezoidal distortion. The multi-projection simulation tool may provide the function for the user to adjust the vertical or horizontal trapezoidal calibration angle, and calculate the homography matrix of trapezoidal calibration on the image plane of the projection device.

The pixel shader firstly transforms HFOV/VFOV to the image plane coordinate of the projection device for homography matrix transformation based on the HFOV/HFOV of the target rendering point of the projection screen, and the image resolution and the projection FOV of the projection device to obtain new plane coordinate. That is the position of the rendering point corresponding to the image plane of the projection device. Finally, new plane coordinate is transformed back to HFOV/HFOV, and the world coordinate position of the point after trapezoidal calibration is obtained by using the depth map table for depicting the projection rim after trapezoidal calibration.

When the trapezoidal calibration is activated, the rendering point in the pixel shader is on the position after the trapezoidal calibration, and the point needs to be restored to the position before calibration to determine whether the point is in the projection region and determine the texture coordinate of the image. For example, the inverse homography matrix may be introduced to restore the position before calibration to obtain the trapezoidal calibration simulation result with texture image scene.

Further, when projecting to the curved projection screen, the projection distortion may occur following the curvature variation of the projection screen. The multi-projection simulation tool may use the virtual longitude line/latitude line on the curved projection screen to find new projection rim attached to the longitude line/latitude line for maintaining the maximum range in the original projection rim as much as possible. The rim is the projection rim after distortion calibration.

Next, the position of the index value of the depth map table corresponding to the projection point on the projection screen may be calculated by scanning the depth map table in an index manner with the position and FOV of the projection device. The index value matrix including the rim may be composed through inspecting whether the projection point of the projection screen is in the new projection rim. Then, the index value matrix of the original projection rim is being corresponded to the index value matrix of the calibrated projection rim to calculate the homography matrix between the two. The same with the trapezoidal calibration, the matrix provide the pixel shader to calculate and transform the position of the rendering point on the projection screen to achieve the result of scene calibration for the projection content.

When the curvature of the projection screen is greater, the projection screen may be divided into a plurality of sub-regions, and the homography matrix is calculated in each sub-region to achieve more precise result.

Referring back to FIG. 5A and FIG. 5B, after the aforementioned simulation procedure, the projection regions 121 of the projection devices are obtained. Next, a plurality of first feature points 122 are defined in the projection regions 121. The camera device simulation sub-procedure is used to simulate the virtual shooting image 131 of the camera device. In some embodiments, the virtual shooting image 131 includes the projection regions 121 and the first feature points 122 (indicated as the second feature points 132 in FIG. 5B).

Here explains the camera device simulation sub-procedure. The multi-projection simulation tool may provide the function for the user to create the camera device in the scenario and set the parameters such as the position of the camera device in the scene, the lens gesture (such as elevation angle, azimuth angle, roll angle) of the camera device, and FOV of the lens of the camera device.

When entering the camera device simulation sub-procedure (camera view simulation), three-dimensional perspective matrix is established by the parameters of the camera device to show the image from the camera device's view, which is similar to the rendering effect of photographing by the camera device. Moreover, the exporting function may also be provided to save the image file for using in the automatic calibration procedure. As a result, the virtual shooting image 131 of simulating the photographing by the camera device may be obtained, and the virtual shooting image 131 includes the projection regions 121 and the first feature points 122.

Specifically, the difference of simulating the three-dimensional real scene being corresponded to the projection scene (two-dimensional scene) obtained by the camera device may be used to calculate for proportionally eliminating the distortion generated by the camera device. For example, taking the warping of two projection devices as an example, in order to let the scene be equal-proportionally displayed on the projection scene, the warping and blending as shown in FIG. 5A (three-dimensional coordinate in real situation) is performed for the two projection devices. As a result, the overall scene may not be in a condition of left portion being larger than right portion or vice versa.

If the calibration is performed by the camera device's view, the projection scene close to the camera device is smaller relatively, and the projection scene away from the camera device is larger relatively. Thus, the problem of left portion being larger than right portion after warping may occur. When the camera device is used for calibration in real situation, the information as shown in FIG. 5A is not viewable. Unless the user uses the rangefinder or tape measurer to measure the projection screen and defines an origin of a three-dimensional coordinate, the information may be obtained for calibrating the distortion of the camera device.

Therefore, in order to overcome the complexity and time-consuming problem, the disclosure establishes the warped profile (the correspondence of feature points at projection surface/screen and camera view) as shown in FIG. 5A and FIG. 5B by simulation.

Referring back to FIG. 1 and FIG. 2, in the step S06, the virtual projection position and the virtual image distortion correction of the projection device 12 are adjusted based on the first feature points.

In the multi-projection simulation tool, when the automatic layout is finished, the layout assist may provide the manual fine tune function to the projection device in each row. Possible fine tune items include the installation on desktop or ceiling, movement along up-down position, supporting bracket height, etc. In the fine tunable range, the multi-projection simulation tool may automatically adjust the vertical shift of the lens of the projector to maintain the scene brightness, etc., projected to the projection screen unchanged. Further, the appearance color of the projection devices on each row may be designated here for increasing recognizability on the layout image.

If the user wants to adjust the position of single projection device, the user may lock the projection in the projection reference of setup item of the projection device to fine-tune the position of left/right, front/rear, up/down of the projector, and the fine tunable range of the projector in the layout space may be indicated in the three-dimensional simulation scenario. The multi-projection simulation tool may automatically adjust the horizontal shift, vertical shift, image scaling ratio of the projector, and projection scene range.

In some embodiments, the adjusting of the virtual projection position and the virtual image distortion correction of the projection device 12 based on the first feature points further includes: defining a plurality of second feature points in the virtual shooting image based on the first feature points, and comparing the first feature points and the second feature points to obtain a virtual image difference parameter. The virtual photographing position of the camera device 13 is adjusted based on the virtual image difference parameter. In some embodiments, the adjusting of the virtual photographing position of the camera device 13 based on the virtual image difference parameter further includes: adjusting a simulated photographing parameter of the camera device 13 based on the virtual image difference parameter. In other words, the virtual projection position and the virtual image distortion correction of the projection device 12 may be adjusted in advance according to the virtual image difference parameter obtained as shown in FIG. 5A and FIG. 5B, and the virtual photographing position of the camera device 13 may be adjusted simultaneously. More specifically, the simulated photographing parameter of the camera device 13, for example, color temperature, film speed (photographic sensitivity), focal length, and exposure, etc., may also be adjusted according to the virtual shooting image.

Referring back to FIG. 1 and FIG. 2, in the step S07, the simulated overview profile is outputted. The simulated overview profile includes the virtual projection position and the virtual image distortion correction both being adjusted. In some embodiments, the simulated overview profile may also include the virtual color and the virtual brightness both being adjusted, and the blending calibration profile being adjusted. In the end, the multi-projection simulation tool may output the information including the selection information of the projection lens and the projection device, the three-view diagram of the on-site installation position of the projection device, the on-site position information of the projection device, the lens information of the projection device, the shift setup information of the lens of each projection device, and the simulated lens position and FOV information, etc., according to the aforementioned projection simulation procedure.

In summary, the planning and arrangement of the related-art immersive projection system are relatively difficult. On the other hand, the calibration method of the immersive projection system in the disclosure may link the positions of the projection device and the camera device in actual situation through the simulated world generated by three-dimensional modeling, optimize the projection position of the projection device in the three-dimensional modeling through the scene obtained by simulating the camera device, and output the optimized simulated overview profile.

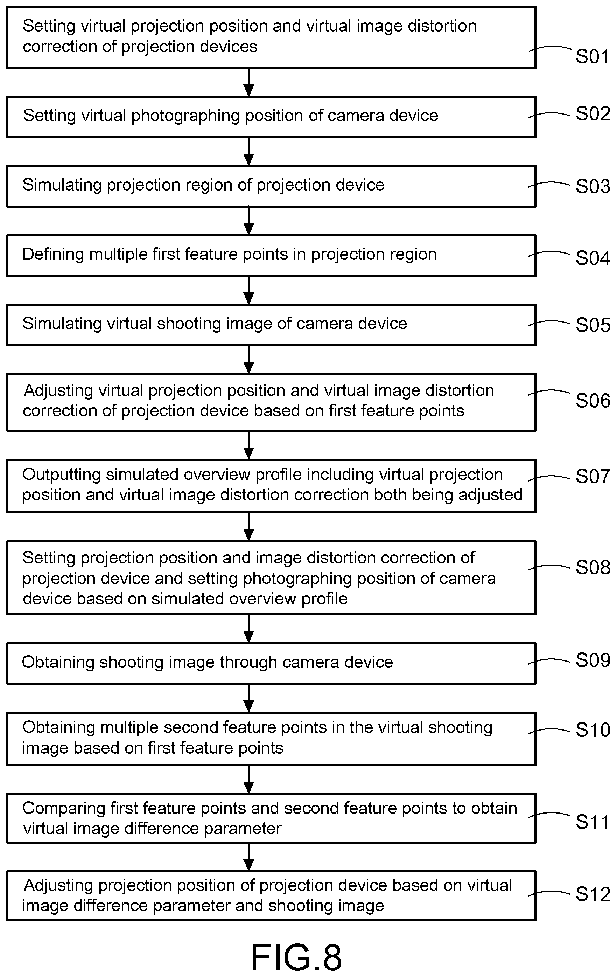

FIG. 8 is the flowchart of the calibration method of the immersive projection system in the second embodiment of the disclosure. As shown in FIG. 8, the calibration method of the immersive projection system in the second embodiment of the disclosure may further include the step S08 to the step S12. As shown in FIG. 2, FIG. 5A, FIG. 5B, and FIG. 8, the step S08 is setting a projection position and an image distortion correction (or geometric distortion correction of projection scene) of the projection device 12 and setting a photographing position of the camera device 13 based on the simulated overview profile. The step S09 is obtaining a shooting image through the camera device 13. The step S10 is obtaining a plurality of second feature points 132 in the virtual shooting image 131 based on the first feature points 122. The step S11 is comparing the first feature points 122 and the second feature points 132 to obtain a virtual image difference parameter. The step S12 is adjusting the projection position and the image distortion correction of the projection device 12 based on the virtual image difference parameter and the shooting image. In some embodiments, the obtaining of the shooting image through the camera device 13 further includes: obtaining a plurality of third feature points in the shooting image based on the first feature points; and comparing the virtual image difference parameter and the third feature points to obtain an image difference parameter. In some embodiments, the adjusting of the projection position and the image distortion correction of the projection device 12 based on the virtual image difference parameter and the shooting image further includes: adjusting the projection position and the image distortion correction of the projection device 12 based on the image difference parameter.

In some embodiments, in the virtual shooting image 131, a plurality of second feature points 132 is defined according to the first feature points 122, and the virtual image difference parameter is obtained by comparing the first feature point 122 and the second feature points 132. In other words, the warped profile as shown in FIG. 5A and FIG. 5B is established by simulation in advance, and the virtual image difference parameter of the first feature point 122 and the second feature points 132 in FIG. 5A and FIG. 5B is calculated.

Specifically, the calibration method of the immersive projection system may use the obtained first feature points 122 (for example, FIG. 5A) to combine with the feature points required to be adjusted in actual situation. A plurality of third feature points may be obtained through the shooting image acquired by using the camera device 12 in actual situation, the image difference parameter may be obtained by comparing the first feature points and the third feature points (similar to the second feature points 132 in FIG. 5B) to optimize the simulating feature points (for example, the second feature points 132 in FIG. 5B), and the two-dimensional warping result may be obtained after warping is completed. In other words, the virtual shooting image of the virtual camera device may be used to obtain the virtual image difference parameter, the shooting image of the camera device may be used to obtain the image difference parameter, and the result may be optimized through comparing the difference between the two to generate almost equally proportional scene in the end.

The calculation method of the calibration-compensation manner by practically using the virtual camera device and the on-site camera device is briefly described as below.

First, after the desired camera device's view and the projection device's position in simulation are established, the warping result of the camera device's view (A) and the world coordinate (B) in simulation is generated, and the difference (X) between every feature point is generated through the difference of the two. The equation is as below.

$$X = f(A) - f(B) \quad (1)$$

Next, the feature point information from FIG. 5B is brought to the coordinate that needs to be calibrated in actual situation. The equation is as below.

$$\text{Feature Real} = \text{Feature Simulation} \quad (2)$$

The information obtained through the on-site camera device is used to optimized the error in simulated data of Feature Real, and the result after calculating the warping is as below.

Feature Real Point $(X_n, Y_n)$ = Feature Real Point $(n, n) \times$ Optimization Function (3)

$$Y = f(\text{Feature Real Point}(X_n, Y_n))$$

Finally, the result from equation (3) is optimized by the value calculated through the equation (1).

$$Z = f(X \times Y) \quad (4)$$

Specifically, the virtual camera device in simulation is used to obtain the image from the projection device, and to establish the correspondence of the feature points between the camera device and the projection device. The corresponding relation between the feature points may be optimized through establishing the correspondence of the feature points in the real device and performing image fine tune to the corresponding feature points.

In other words, before performing the geometric simulation optimization of a plurality of projection devices, the simulated feature information is established in advance, and is optimized through connecting with the on-site camera device. After the connection is completed, the projection scene is moved to target position using the shift amount of the projection device according to the simulation result, and the on-site camera device is placed to the targe position by the simulated position of the camera device.

It is worth mentioning that the camera device may use webcam, single lens reflex camera, mobile camera, or industrial camera. In some embodiments, when the mobile camera is used as the platform for obtaining the image, an edge computing process may be performed in the mobile camera to reduce the loading of practical image transmission.

Moreover, in some embodiments, the photographing parameter of the camera device may be set up according to the virtual photographing parameter. In other words, the photographing position of the on-site camera device may be adjusted through the calibration-compensation to the image difference between the virtual camera device and the on-site camera device. At the same time, the photographing parameter of the on-site camera device, such as the setting of shutter time, color temperature, film speed, focal length, and exposure, etc., may be set up according to the virtual photographing parameter.

In other words, during on-site calibration stage (practical installation stage), the shutter time of the camera device is automatically set to be the same with the output frame time of the projection device to eliminate asynchronous shooting image according to the simulated parameter at the simulation stage. Next, the film speed is set according to the parameter at the simulation stage to adapt the environmental brightness and noise of whole scenario. Finally, the problem of optical noise generated by the stray light is corrected through fine-tuning the threshold value.

The on-site calibration process is performed by shooting image of a test pattern, comprising the feature points, output from projector device. On the other hand, if the test pattern that needs to be inspected is partially blocked by some objects and not all feature points are able to obtain, in order to prevent incomplete inspection from enlarging the position error during inspection, some kinds of algorithms may be used to eliminate the unstable feature points.

After obtaining shooting image through camera device, the horizontal image noise and vertical image noise may be eliminated through binary threshold, and the projection range may be established by profile scanning whole projection region. Next, when verifying the first test pattern, the image is divided into a plurality of blocks through library, and each of the divided image block is being calculated. Each sideline is constructed by using the profile, and the position of each center of circle and radius are calculated through minimum circle algorithm to obtain the features of the complete projection scene

During the optimization procedure being performed, more feature points may be collected with respect to different test patterns to increase the precision of image positioning. When all of the test patterns are inspected, all of the test patterns may be processed by full feature blend for one time to establish denser feature position profile. When the scene exceeds the actual projection region and the problem of vanishing point occurs, the corresponding vectors may be calculated through the horizontal image and vertical image inspected in the beginning and all test patterns, and the position of the simulated feature points may be optimized through vectors and the homography matrix method.

After the optimization, the simulated feature points and the actual image may be used to perform warp and blend between the projection devices, and the desired edge blending may be calculated through the technology.

Moreover, after the desired color value (red, green, blue, cyan, magenta, yellow, white balance) and the proper value of brightness of each projection device are calculated through color simulation, the camera device is used to compensate and adjust the seven kinds of colors to optimize the uniformity of the color projections from the projection devices.

Before the color compensation of the projection devices is performed, the color simulation result is set up to the projection device in advance. In order to compensate the uniformity of the simulated color, the actual on-site scene is obtained through connecting the on-site camera device to perform the optimization of the color uniformity of the projection device, and the projection position of the projection device is moved to the target position during simulation.

When inspecting the image color, the image noise is eliminated through binary threshold, and the whole projection region is being profile scanned to establish projection region of interest (ROI). Next, RGB color value of each projection device is calculated through the projected image region. During color compensation, seven kinds of color values of the projection device are adjusted through seven kinds of difference test patterns.

Three kinds of main colors are regulated by seven kinds of colors (red, green, blue, cyan, magenta, yellow, white balance). During the regulation procedure, the colors are not interfered with each other. The adjusting method is as below.

$$\begin{bmatrix} R' \\ G' \\ B' \end{bmatrix} = \begin{bmatrix} Rr & Rg & Rb & Rc & Rm & Ry & Rw \\ Gr & Gg & Gb & Gc & Gm & Gy & Rg \\ Br & Bg & Bb & Bc & Bm & By & Rb \end{bmatrix} \begin{bmatrix} R \\ G \\ B \\ C \\ M \\ Y \\ W \end{bmatrix}$$

In color compensation stage, the times of color compensation are calculated through algorithm, and the color compensation is performed by open loop manner with designated times.

In summary, the calibration method of the immersive projection system in the disclosure may assist the user to perform the scene planning, the selection of the projection device and the lens of the camera device, and the scene projection simulation during the system planning stage, and may output the simulated overview profile according to the projection simulation result. On one hand, the calibration method of the immersive projection system in the disclosure may provide the user for the references of the physical installation position, projection orientation, selection of projection lens of the on-site projection device. On the other hand, the calibration method of the immersive projection system in the disclosure may also provide the user for the arrangement information of the projection size of projection device, displacement of the lens mount, keystone correction, etc., related to multi-projection installation and automatic calibration procedure. Further, the calibration method of the immersive projection system in the disclosure may provide the automatic calibration procedure to suggest the information such as the types of lens for the projection device to be used, the arranging position, field of view (FOV), etc., for the automatic calibration procedure to smoothly perform the automatic warping, blending, and color calibration, etc., assisted by the camera device. Moreover, after the automatic calibration procedure is completed, the related information corresponding to multi-projection-scene division, blending band, etc., may be outputted to set up the display card of the media server for outputting pictures.

Therefore, as described above, the calibration method of the immersive projection system in the disclosure may provide an overall solution covering the system planning, selection of the projection device and projection lens, beginning of the projection simulation to the projection automatic calibration and installation, setup of content player. As a result, the difficulties of system planning and establishment may be greatly decreased to facilitate the rapid establishment and promotion of the immersive projection system.

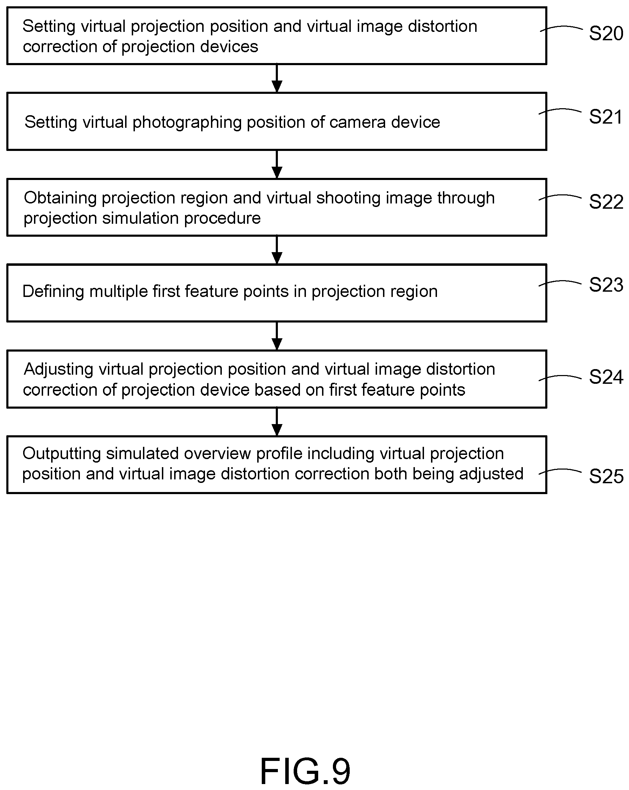

FIG. 9 is the flowchart of the calibration method of the immersive projection system in the fourth embodiment of the disclosure. As shown in FIG. 9, the calibration method of the immersive projection system in the third embodiment further includes the step S20 to the step S25. The step S20 is setting a virtual projection position and a virtual image distortion correction of a projection device. The step S21 is setting a virtual photographing position of a camera device. The step S22 is obtaining a projection region and a virtual shooting image through a projection simulation procedure. The step S23 is defining a plurality of first feature points in the projection region. The step S24 is adjusting the virtual projection position and the virtual image distortion correction of the projection device based on the first feature points. The step S25 is outputting a simulated overview profile including the virtual projection position and the virtual image distortion correction both being adjusted.

The calibration method of the immersive projection system in the third embodiment of the disclosure is obtaining the projection region and the virtual shooting image through the projection simulation procedure (step S22). The specific embodiment is described in the first embodiment, here is omitted for brevity.

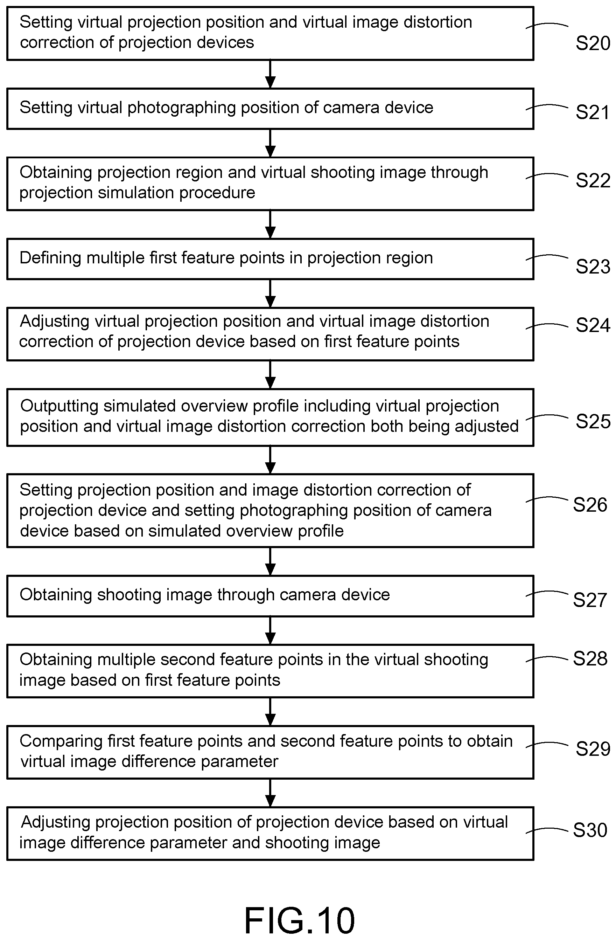

FIG. 10 is the flowchart of the calibration method of the immersive projection system in the fourth embodiment of the disclosure. As shown in FIG. 10, comparing to the third embodiment, the calibration method of the immersive projection system in the fourth embodiment of the disclosure may further include the step S26 to the step S30. The step S26 is setting a projection position and an image distortion correction of the projection device and setting a photographing position of the camera device based on the simulated overview profile. The step S27 is obtaining a shooting image through the camera device. The step S28 is obtaining a plurality of second feature points in the virtual shooting image based on the first feature points. The step S29 is comparing the first feature points and the second feature points to obtain a virtual image difference parameter. The step S30 is adjusting the projection position and the image distortion correction of the projection device based on the virtual image difference parameter and the shooting image.

The specific embodiment of the calibration method of the immersive projection system in the fourth embodiment of the disclosure is described in the second embodiment. Further, similarly, the photographing parameter of the camera device may be set according to the virtual photographing parameter, here is omitted for brevity.

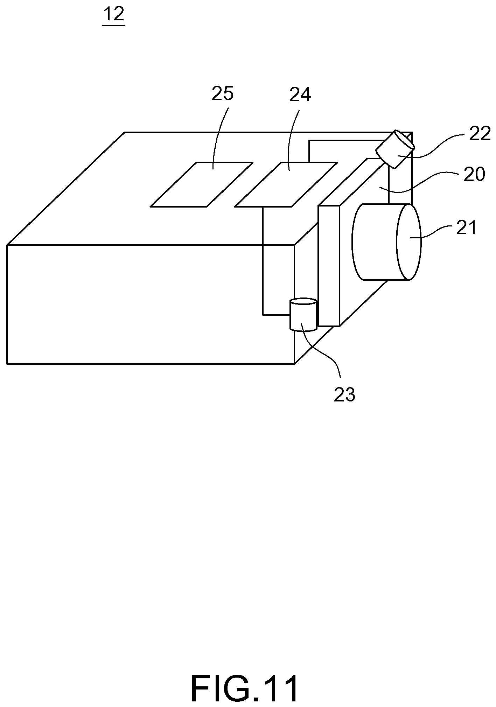

FIG. 2 is the schematic diagram of the immersive projection system 1 of the disclosure. FIG. 11 is the schematic diagram of the projection device 12 of the disclosure. The immersive projection system 1 is cooperated with a projection screen 10. The immersive projection system 1 includes a projection device 12 and a camera device 13. The projection device 12 has a projection position and an image distortion correction (or geometric distortion correction of projection scene), and is configured to project a projection region on the projection screen 10. The camera device is located at a photographing position, and configured to obtain a shooting image. The shooting image has the projection region. The projection position and the image distortion correction of the projection device 12 is set according to the shooting image (for example, the image difference parameter obtained through the shooting image) and the virtual shooting image (for example, the virtual image difference parameter obtained through the shooting image). It should be noted that the simulated result is related to the installation site, thus, the immersive projection system 1 in FIG. 2 exemplarily indicates both the immersive projection system in the virtual environment and the immersive projection system in the installation site, here is not intended to be limiting. It is worth mentioning that, in the embodiments, using a plurality of projection devices 12 as an example, here is not intended to be limiting. In some applications, single projection device 12 (for example, FIG. 3A and FIG. 3B) may be used.

In some embodiments, the projection device 12 may include, for example, an electronic lens mount 20, a selectable projection lens 21, a horizontal-shifting stepper motor 22 (connected with a horizontal-shifting slide rail), and a vertical-shifting stepper motor 23 (connected with a vertical -shifting slide rail), etc., here is not intended to be limiting. Further, the control unit (for example, MCU) of the projection device 12 may control the electronic lens mount 20 to horizontally and vertically move through the motor driving circuit 24, and the projection scene moves with that accordingly, here is not intended to be limiting. Further, the projection device 12 may further include an electronic image distortion adjusting circuit 25 for adjusting the geometric distortion correction and blending the edge blending for the projection scene, here is not intended to be limiting.

The specific embodiment of the immersive projection system 1 is described in the aforementioned embodiments, here is omitted for brevity.

In summary, the immersive projection system and the calibration method thereof in the disclosure may assist the user to perform the scene planning, the selection of the projection device and the lens of the camera device, and the scene projection simulation during the system planning stage, and may output the simulated overview profile according to the projection simulation result. On one hand, the calibration method of the immersive projection system in the disclosure may provide the user for the references of the physical installation position, projection orientation, selection of projection lens of the on-site projection device. On the other hand, the calibration method of the immersive projection system in the disclosure may also provide the user for the arrangement information of the projection size of projection device, displacement of the lens mount, keystone correction, etc., related to multi-projection installation and automatic calibration procedure. Further, the calibration method of the immersive projection system in the disclosure may provide the automatic calibration procedure to suggest the information such as the types of lens for the projection device to be used, the arranging position, field of view (FOV), etc., for the automatic calibration procedure to smoothly perform the automatic warping, blending, and color calibration, etc., assisted by the camera device. Moreover, after the automatic calibration procedure is completed, the related information corresponding to multi-projection-scene division, blending band, etc., may be outputted to set up the display card of the media server for outputting pictures.

Therefore, as described above, the immersive projection system and the calibration method thereof in the disclosure may provide an overall solution covering the system planning, selection of the projection device and projection lens, beginning of the projection simulation to the projection automatic calibration and installation, setup of content player. As a result, the difficulties of system planning and establishment may be greatly decreased to facilitate the rapid establishment and promotion of the immersive projection system.

The components of several embodiments are summarized above to allow those skilled in the art to better understand the concepts of the embodiments of the present disclosure. Those skilled in the art should understand that the embodiments of the present disclosure may serve as a basis for designing or modifying other processes and structures to achieve the same objectives and/or obtain the same benefits as the embodiments described herein. Those skilled in the art should also understand that these equivalent structures do not depart from the spirit and scope of the present disclosure, and various changes, substitutions, and other choices may be made without departing from the spirit and scope of the present disclosure. Therefore, the scope of protection of the present disclosure shall be defined by the attached claims.

## Claims

1. A calibration method of an immersive projection system, the calibration method comprising:

setting a virtual projection position and a virtual image distortion correction of a projection device;

setting a virtual photographing position of a camera device;

simulating a projection region of the projection device;

defining a plurality of first feature points in the projection region;

simulating a virtual shooting image of the camera device, wherein the virtual shooting image comprises the projection region and the first feature points;

adjusting the virtual projection position and the virtual image distortion correction of the projection device based on the first feature points; and

outputting a simulated overview profile,

wherein the simulated overview profile comprises the virtual projection position and the virtual image distortion correction both being adjusted.

2. The calibration method according to claim 1, further comprising:

setting a projection position and an image distortion correction of the projection device and setting a photographing position of the camera device based on the simulated overview profile;

obtaining a shooting image through the camera device;

obtaining a plurality of second feature points in the virtual shooting image based on the first feature points;

comparing the first feature points and the second feature points to obtain a virtual image difference parameter; and

adjusting the projection position and the image distortion correction of the projection device based on the virtual image difference parameter and the shooting image.

3. The calibration method according to claim 2, wherein the obtaining of the shooting image through the camera device further comprises:

obtaining a plurality of third feature points in the shooting image based on the first feature points; and

comparing the virtual image difference parameter and the third feature points to obtain an image difference parameter.

4. The calibration method according to claim 3, wherein the adjusting of the projection position and the image distortion correction of the projection device based on the virtual image difference parameter and the shooting image further comprises:

adjusting the projection position and the image distortion correction of the projection device based on the image difference parameter.

5. The calibration method according to claim 1, wherein the setting of the virtual projection position and the virtual image distortion correction of the projection device further comprises:

setting a virtual color and a virtual brightness of the projection device; and

adjusting the virtual color and the virtual brightness of the projection device based on the first feature points, wherein the simulated overview profile further comprises the virtual color and the virtual brightness both being adjusted.

6. The calibration method according to claim 1, wherein the setting of the virtual projection position and the virtual image distortion correction of the projection device further comprises:

setting a plurality of virtual projection positions and a plurality of virtual image distortion corrections of a plurality of projection devices;

wherein the adjusting of the virtual projection position and the virtual image distortion correction of the projection device based on the first feature points further comprises:

adjusting a blending calibration profile of the projection devices based on the first feature points, wherein the simulated overview profile further comprises the blending calibration profile being adjusted.

7. The calibration method according to claim 1, wherein the adjusting of the virtual projection position and the virtual image distortion correction of the projection device based on the first feature points further comprises:

obtaining a plurality of second feature points in the virtual shooting image based on the first feature points;

comparing the first feature points and the second feature points to obtain a virtual image difference parameter; and

adjusting the virtual photographing position of the camera device based on the virtual image difference parameter.

8. The calibration method according to claim 7, wherein the adjusting of the virtual photographing position of the camera device based on the virtual image difference parameter further comprises:

adjusting a simulated photographing parameter of the camera device based on the virtual image difference parameter.

9. The calibration method according to claim 8, further comprising:

setting a projection position and an image distortion correction of the projection device and setting a photographing position of the camera device based on the simulated overview profile;

setting a photographing parameter of the camera device based on the simulated photographing parameter;

obtaining a shooting image through the camera device; and

adjusting the projection position and the image distortion correction of the projection device based on the virtual image difference parameter and the shooting image.

10. A calibration method of an immersive projection system, the calibration method comprising:

setting a virtual projection position and a virtual image distortion correction of a projection device;

setting a virtual photographing position of a camera device;

obtaining a projection region and a virtual shooting image through a projection simulation procedure;

defining a plurality of first feature points in the projection region;

adjusting the virtual projection position and the virtual image distortion correction of the projection device based on the first feature points; and

outputting a simulated overview profile,

wherein the simulated overview profile comprises the virtual projection position and the virtual image distortion correction both being adjusted.

11. The calibration method according to claim 10, further comprising:

setting a projection position and an image distortion correction of the projection device and setting a photographing position of the camera device based on the simulated overview profile;

obtaining a shooting image through the camera device;

obtaining a plurality of second feature points in the virtual shooting image based on the first feature points;

comparing the first feature points and the second feature points to obtain a virtual image difference parameter; and

adjusting the projection position and the image distortion correction of the projection device based on the virtual image difference parameter and the shooting image.

12. The calibration method according to claim 11, wherein the obtaining of the shooting image through the camera device further comprises:

obtaining a plurality of third feature points in the shooting image based on the first feature points; and

comparing the virtual image difference parameter and the third feature points to obtain an image difference parameter.

13. The calibration method according to claim 12, wherein the adjusting of the projection position and the image distortion correction of the projection device based on the virtual image difference parameter and the shooting image further comprises:

adjusting the projection position and the image distortion correction of the projection device based on the virtual image difference parameter and the image difference parameter.

14. The calibration method according to claim 10, wherein the projection simulation procedure comprises a projection geometry simulation sub-procedure, a camera device simulation sub-procedure, a warp simulation sub-procedure, a color and brightness simulation sub-procedure, and a blend simulation sub-procedure.

15. The calibration method according to claim 11, wherein the adjusting of the virtual projection position and the virtual image distortion correction of the projection device based on the first feature points further comprises:
adjusting the virtual photographing position of the camera device based on the virtual shooting image.

16. The calibration method according to claim 15, wherein the adjusting of the virtual photographing position of the camera device based on the virtual shooting image further comprises:
adjusting a simulated photographing parameter of the camera device based on the virtual shooting image.

17. The calibration method according to claim 16, further comprising:

setting a projection position and an image distortion correction of the projection device and setting a photographing position of the camera device based on the simulated overview profile;
setting a photographing parameter of the camera device based on the simulated photographing parameter;
obtaining a shooting image through the camera device; and
adjusting the projection position and the image distortion correction of the projection device based on the virtual image difference parameter and the shooting image.

18. An immersive projection system, cooperated with a projection screen, the immersive projection system comprising:

a projection device, comprising a projection position and an image distortion correction, and configured to project a projection region on the projection screen; and
a camera device, comprising a photographing position, and configured to obtain a shooting image, wherein the shooting image comprises the projection region,
wherein the projection position and image distortion correction of the projection device is set based on the shooting image and a virtual shooting image.

19. The immersive projection system according to claim 18, wherein the virtual shooting image is obtained through a projection simulation procedure.

20. The immersive projection system according to claim 19, wherein the projection simulation procedure comprises a projection geometry simulation sub-procedure, a camera device simulation sub-procedure, a warp simulation sub-procedure, a color and brightness simulation sub-procedure, and a blend simulation sub-procedure.

Setting virtual projection position and virtual image distortion correction of projection devices — S01

Setting virtual photographing position of camera device — S02

Simulating projection region of projection device — S03

Defining multiple first feature points in projection region — S04

Simulating virtual shooting image of camera device — S05

Adjusting virtual projection position and virtual image distortion correction of projection device based on first feature points — S06

Outputting simulated overview profile including virtual projection position and virtual image distortion correction both being adjusted — S07

# FIG.1

FIG.2

10A

## FIG.3A

10B

## FIG.3B

FIG.3C

FIG.3D

10E

# FIG.3E

10F

# FIG.3F

10G

FIG.3G

W

D

12

FIG.4

FIG.5A

FIG.5B

## FIG.6A

## FIG.6B

FIG.7A

FIG.7B

Setting virtual projection position and virtual image distortion correction of projection devices ⌐~ S01

Setting virtual photographing position of camera device ⌐~ S02

Simulating projection region of projection device ⌐~ S03

Defining multiple first feature points in projection region ⌐~ S04

Simulating virtual shooting image of camera device ⌐~ S05

Adjusting virtual projection position and virtual image distortion correction of projection device based on first feature points ⌐~ S06

Outputting simulated overview profile including virtual projection position and virtual image distortion correction both being adjusted ⌐~ S07

Setting projection position and image distortion correction of projection device and setting photographing position of camera device based on simulated overview profile ⌐~ S08

Obtaining shooting image through camera device ⌐~ S09

Obtaining multiple second feature points in the virtual shooting image based on first feature points ⌐~ S10

Comparing first feature points and second feature points to obtain virtual image difference parameter ⌐~ S11

Adjusting projection position of projection device based on virtual image difference parameter and shooting image ⌐~ S12

FIG.8

| Setting virtual projection position and virtual image distortion correction of projection devices | S20 |

| Setting virtual photographing position of camera device | S21 |

| Obtaining projection region and virtual shooting image through projection simulation procedure | S22 |

| Defining multiple first feature points in projection region | S23 |

| Adjusting virtual projection position and virtual image distortion correction of projection device based on first feature points | S24 |

| Outputting simulated overview profile including virtual projection position and virtual image distortion correction both being adjusted | S25 |

# FIG.9

| | |
|---|---|
| Setting virtual projection position and virtual image distortion correction of projection devices | S20 |
| Setting virtual photographing position of camera device | S21 |
| Obtaining projection region and virtual shooting image through projection simulation procedure | S22 |
| Defining multiple first feature points in projection region | S23 |
| Adjusting virtual projection position and virtual image distortion correction of projection device based on first feature points | S24 |
| Outputting simulated overview profile including virtual projection position and virtual image distortion correction both being adjusted | S25 |
| Setting projection position and image distortion correction of projection device and setting photographing position of camera device based on simulated overview profile | S26 |
| Obtaining shooting image through camera device | S27 |
| Obtaining multiple second feature points in the virtual shooting image based on first feature points | S28 |
| Comparing first feature points and second feature points to obtain virtual image difference parameter | S29 |
| Adjusting projection position of projection device based on virtual image difference parameter and shooting image | S30 |

# FIG.10

FIG.11

## INTERNATIONAL SEARCH REPORT

| | International application No. |
|---|---|
| | **PCT/CN2024/078815** |

| A. | CLASSIFICATION OF SUBJECT MATTER |
|---|---|
| | H04N 13/363(2018.01)i |

According to International Patent Classification (IPC) or to both national classification and IPC

| B. | FIELDS SEARCHED |
|---|---|

Minimum documentation searched (classification system followed by classification symbols)

IPC：H04N

Documentation searched other than minimum documentation to the extent that such documents are included in the fields searched

Electronic data base consulted during the international search (name of data base and, where practicable, search terms used)

CNABS, CNTXT, CNKI, VEN, WOTXT, EPTXT, USTXT: 投影, 虚拟, 位置, 变形, 失真, 特征点, 画面, 图像, 校准, 校正, 矫正, projection, virtual, position, deformation, distortion, feature, characteristic, point, picture, image, calibration, correction

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2022080260 A1 (PANASONIC INTELLECTUAL PROPERTY MANAGEMENT CO., LTD.) 21 April 2022 (2022-04-21)<br>entire document | 1-20 |
| A | CN 111061421 A (BEIJING ENLIGHTV TECHNOLOGY CO., LTD.) 24 April 2020 (2020-04-24)<br>entire document | 1-20 |
| A | CN 114827569 A (MIGU VIDEO TECHNOLOGY CO., LTD. et al.) 29 July 2022 (2022-07-29)<br>entire document | 1-20 |
| A | US 2016080710 A1 (POINTCLOUD MEDIA, LLC) 17 March 2016 (2016-03-17)<br>entire document | 1-20 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 May 2024** | **28 May 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/078815**

| Patent document cited in search report | | | Publication date (day/month/year) | Patent family member(s) | | | Publication date (day/month/year) |
|---|---|---|---|---|---|---|---|
| WO | 2022080260 | A1 | 21 April 2022 | JPWO | 2022080260 | A1 | 21 April 2022 |
| | | | | US | 2023247184 | A1 | 03 August 2023 |
| CN | 111061421 | A | 24 April 2020 | | None | | |
| CN | 114827569 | A | 29 July 2022 | | None | | |
| US | 2016080710 | A1 | 17 March 2016 | US | 9787958 | B2 | 10 October 2017 |
| | | | | US | 2018027219 | A1 | 25 January 2018 |
| | | | | US | 10063822 | B2 | 28 August 2018 |

Form PCT/ISA/210 (patent family annex) (July 2022)